# EUROPEAN PATENT APPLICATION

(11) **EP 4 632 597 A1**
(43) Date of publication of application: **15.10.2025**
(21) Application number: 23915569.0
(22) Date of filing: 10.08.2023
(51) Int. Cl.: G06F 16/2457

(54) **AIRLINE TICKET CHANGE INFORMATION PROCESSING METHOD AND APPARATUS, AND ELECTRONIC DEVICE AND STORAGE MEDIUM**

(30) Priority: 10.01.2023 CN 202310035688
(71) Applicant: Travelsky Technology Limited, Beijing 101318 (CN)
(72) Inventor: ZHANG, Honghai, Beijing 101318 (CN); ZHANG, Xuying, Beijing 101318 (CN); ZHAN, Ying, Beijing 101318 (CN); LIU, Shuo, Beijing 101318 (CN); YANG, Yongkai, Beijing 101318 (CN); LI, Guijuan, Beijing 101318 (CN); LI, Ruoyu, Beijing 101318 (CN); MA, Wei, Beijing 101318 (CN)
(74) Representative: Meissner Bolte Partnerschaft mbB
(86) International application number: PCT/CN2023/112164
(87) International publication number: WO 2024/148808

(57) **Abstract**

Disclosed in the present application are an airline ticket change information processing method and apparatus, an electronic device, and a storage medium. The method includes: obtaining a change date of at least one flight segment of a current target itinerary selected by a current user; splitting each date within a preset range based on each change date to obtain a target date corresponding to each change date; constructing each date unit by using the target date corresponding to each change date; generating a plurality of candidate flight combinations corresponding to each date unit based on flight information of each target date; calculating a price difference of each of the candidate flight combinations corresponding to each date unit; selecting the candidate flight combination with the lowest price difference from the candidate flight combinations corresponding to each date unit as a final selected flight combination corresponding to the date unit; and feeding back flight information of each date unit and the price difference of the corresponding final selected flight combination to the current user.

## Description

This patent application claims the priority of Chinese Patent Application No. 202310035688.6, entitled "AIRLINE TICKET CHANGE INFORMATION PROCESSING METHOD AND APPARATUS, ELECTRONIC DEVICE, AND STORAGE MEDIUM" filed with the China National Intellectual Property Administration on January, 10, 2023, the disclosure of which is incorporated by reference herein in its entirety.

### TECHNICAL FIELD

The present application relates to the technical field of airline ticket information processing, in particular to an airline ticket change information processing method and apparatus, an electronic device, and a storage medium.

### BACKGROUND

With the development of airlines' e-commerce direct-selling business, the self-service sales of airline tickets on self-service devices, mobile phones, and other electronic devices have become increasingly sophisticated, and the airline ticket change service closely related to airline ticket sales also needs to be continuously improved in terms of self service and can no longer rely too much on manual processing.

At present, when passengers handle airline ticket change services by themselves, they mainly reply on the original ticket to be changed and then search for a fixed date. At this time, the system recalculates the original ticket and obtains its change rules. Then, according to the fixed date searched by the passenger, it calculates the change fee for each flight on that date and feeds the change fees back to the passenger for selection to carry out the airline ticket change.

However, in the existing method, since the information searched for each operation is related to the airline ticket change on a fixed date, the information available for users to choose from is limited, and the users need to perform multiple operations. Moreover, for round-trip ticket changes, separate searches are also required. Therefore, the existing method not only is inconvenient to operate, but also does not facilitate the passengers to quickly and accurately select the most cost-effective changed flight.

### SUMMARY

Based on the above deficiencies in the prior art, the present application provides an airline ticket change information processing method and apparatus, an electronic device, and a storage medium, to solve the problems that the prior art is not convenient enough and it is not easy to select the most cost-effective flight.

To achieve the above objective, the present application provides the following technical solutions:
In a first aspect, the present application provides an airline ticket change information processing method, including:
obtaining a change date of at least one flight segment of a current target itinerary selected by a current user;
splitting each date within a preset range based on each of the change dates to obtain a target date corresponding to the change date;
constructing each date unit by using the target date corresponding to each of the change dates, where one of the date units includes one of the target dates corresponding to each of the change dates, and a sequential order of the target dates conforms to a flight segment order of the corresponding change dates;
generating a plurality of candidate flight combinations corresponding to each of the date units based on flight information of each of the target dates, where one of the candidate flight combinations corresponding to the date unit includes one target flight in each of the target dates in the date unit, and the target flight on the target date refers to a flight whose flight segment is consistent with that on the change date corresponding to the target date in the target dates;
calculating a price difference of each of the candidate flight combinations corresponding to each of the date units;
selecting the candidate flight combination with the lowest price difference from the candidate flight combinations corresponding to each of the date units as a final selected flight combination corresponding to the date unit; and
feeding back flight information of each of the date units and the price difference of the corresponding final selected flight combination to the current user.

Optionally, in the above airline ticket change information processing method, the splitting each date within a preset range based on each of the change dates to obtain a target date corresponding to the change date includes:
splitting each date within seven days with each of the change dates as a middle date to obtain a target date corresponding to the change date.

Optionally, in the above airline ticket change information processing method, the constructing each date unit by using the target date corresponding to each of the change dates includes:
if there is only one change date, determining each of the target dates corresponding to the change date as one of the date units;
if there are a plurality of change dates, combining each of the target dates corresponding to each of the change dates to obtain a plurality of date combinations, where each of the date combinations includes one of the target dates corresponding to each of the change dates; and
screening out the date combination in which the sequential order of the included target dates conforms to the flight segment order of the corresponding change dates from the date combinations as the date unit.

Optionally, in the above airline ticket change information processing method, the generating a plurality of candidate flight combinations corresponding to each of the date units based on flight information of each of the target dates includes:
if there is only one change date, determining, based on the flight information of the target date in each of the date units, each of the target flights on the target date in the date unit as a flight combination corresponding to the date unit;
if there are a plurality of change dates, combining, based on the flight information of each of the target dates in each of the date units, each of the target flights on the target date in the date unit to obtain a flight combination corresponding to the date unit, where one of the flight combinations includes one of the target flights in each of the target dates in the date unit;
screening out, based on information of the current user, the flight combinations that meet the expectation of the current user from the flight combinations corresponding to each of the date units;
determining whether the number of the screened flight combinations corresponding to each of the date units is greater than a preset number;
if it is determined that the number of the screened flight combinations corresponding to the date unit is not greater than the preset number, determining the screened flight combinations corresponding to the date unit as the candidate flight combinations corresponding to the date unit;
if it is determined that the number of the screened flight combinations corresponding to the date unit is greater than the preset number, calculating, based on flight information of each of the target flights, scores of the screened flight combinations corresponding to the date unit; and
selecting, based on the scores of the screened flight combinations corresponding to the date unit, the preset number of the flight combinations from the screened flight combinations corresponding to the date unit, and determining the selected flight combinations as the candidate flight combinations corresponding to the date unit.

Optionally, in the above airline ticket change information processing method, before calculating a price difference of each of the candidate flight combinations corresponding to each of the date units, the method further includes:
generating a calculation request message for each of the candidate flight combinations corresponding to each of the date units; and
storing each of the date units, each of the candidate flight combinations corresponding to each of the date units, and the calculation request message according to a two-level storage structure.

Optionally, in the above airline ticket change information processing method, the feeding back flight information of each of the date units and the price difference of the corresponding final selected flight combination to the current user includes:
converting and integrating the flight information of each of the date units and the price difference of the corresponding final selected flight combination to obtain a calendar mode change search result, and feeding back the calendar mode change search result to the current user.

In a second aspect, the present application provides an airline ticket change information processing apparatus, including:
an obtaining unit, configured to obtain a change date of at least one flight segment of a current target itinerary selected by a current user;
a splitting unit, configured to split each date within a preset range based on each of the change dates to obtain a target date corresponding to the change date;
a construction unit, configured to construct each date unit by using the target date corresponding to each of the change dates, where one of the date units includes one of the target dates corresponding to each of the change dates, and a sequential order of the target dates conforms to a flight segment order of the corresponding change dates;
a combination and generation unit, configured to generate a plurality of candidate flight combinations corresponding to each of the date units based on flight information of each of the target dates, where one of the candidate flight combinations corresponding to the date unit includes one target flight in each of the target dates in the date unit, and the target flight on the target date refers to a flight whose flight segment is consistent with that on the change date corresponding to the target date in the target dates;
a price difference calculation unit, configured to calculate a price difference of each of the candidate flight combinations corresponding to each of the date units;
a selection unit, configured to select the candidate flight combination with the lowest price difference from the candidate flight combinations corresponding to each of the date units as a final selected flight combination corresponding to the date unit; and
a feedback unit, configured to feed back flight information of each of the date units and the price difference of the corresponding final selected flight combination to the current user.

Optionally, in the above airline ticket change information processing apparatus, the splitting unit includes
a splitting sub-unit, configured to split each date within seven days with each of the change dates as a middle date to obtain a target date corresponding to the change date.

Optionally, in the above airline ticket change information processing apparatus, the construction unit includes:
a first construction unit, configured to determine, when there is only one change date, each of the target dates corresponding to the change date as one of the date units;
a date combination unit, configured to combine, when there are a plurality of change dates, each of the target dates corresponding to each of the change dates to obtain a plurality of date combinations, where each of the date combinations includes one of the target dates corresponding to each of the change dates; and
a second construction unit, configured to screen out the date combination in which the sequential order of the included target dates conforms to the flight segment order of the corresponding change dates from the date combinations as the date unit.

Optionally, in the above airline ticket change information processing apparatus, the combination and generation unit includes:
a first generation unit, configured to determine, based on the flight information of the target date in each of the date units, each of the target flights on the target date in the date unit as a flight combination corresponding to the date unit when there is only one change date;
a flight combination unit, configured to combine, based on the flight information of each of the target dates in each of the date units, each of the target flights on the target date in the date unit to obtain a flight combination corresponding to the date unit when there are a plurality of change dates, where one of the flight combinations includes one of the target flights in each of the target dates in the date unit;
a screening unit, configured to screen out, based on information of the current user, the flight combinations that meet the expectation of the current user from the flight combinations corresponding to each of the date units;
a determination unit, configured to determine whether the number of the screened flight combinations corresponding to each of the date units is greater than a preset number;
a second generation unit, configured to determine, when it is determined that the number of the screened flight combinations corresponding to the date unit is not greater than the preset number, the screened flight combinations corresponding to the date unit as the candidate flight combinations corresponding to the date unit;
a score calculation unit, configured to calculate, based on flight information of each of the target flights, scores of the screened flight combinations corresponding to the date unit when it is determined that the number of the screened flight combinations corresponding to the date unit is greater than the preset number; and
a third generation unit, configured to select, based on the scores of the screened flight combinations corresponding to the date unit, the preset number of the flight combinations from the screened flight combinations corresponding to the date unit, and determine the selected flight combinations as the candidate flight combinations corresponding to the date unit.

Optionally, the above airline ticket change information processing apparatus further includes:
a message generation unit, configured to generate a calculation request message for each of the candidate flight combinations corresponding to each of the date units; and
a storage unit, configured to store each of the date units, each of the candidate flight combinations corresponding to each of the date units, and the calculation request message according to a two-level storage structure.

Optionally, in the above airline ticket change information processing apparatus, the feedback unit includes
a feedback sub-unit, configured to convert and integrate the flight information of each of the date units and the price difference of the corresponding final selected flight combination to obtain a calendar mode change search result, and feed back the calendar mode change search result to the current user.

In a third aspect, the present application provides an electronic device, including:
one or more processing apparatuses; and
a memory having one or more programs stored thereon, where
when the one or more programs are executed by the one or more processing apparatuses, the one or more processing apparatuses implement the airline ticket change information processing method according to any one of the above.

In a fourth aspect, the present application provides a computer storage medium. The computer storage medium is configured to store a program. The program, when executed, is configured to implement the airline ticket change information processing method according to any one of the above.

The present application provides an airline ticket change information processing method. A change date of at least one flight segment of a current target itinerary selected by a current user is obtained, that is, the user is allowed to perform a change search on a plurality of flight segments. Then, each date within a preset range based on each change date is split to obtain a target date corresponding to the change date, so that subsequent corresponding calculations can be performed simultaneously for the target dates, rather than for fixed dates. Subsequently, each date unit is constructed by using the target date corresponding to each change date. One date unit includes one target date corresponding to each change date, and a sequential order of the target dates conforms to a flight segment order of the corresponding change dates. Then, a plurality of candidate flight combinations corresponding to each date unit are generated based on flight information of each target date. One candidate flight combination corresponding to the date unit includes one target flight in each target date in the date unit; and the target flight on the target date refers to a flight whose flight segment is consistent with that on the change date corresponding to the target date in the target dates. Next, a price difference of each candidate flight combination corresponding to each date unit is calculated, and the candidate flight combination with the lowest price difference is selected from the candidate flight combinations corresponding to each date unit as a final selected flight combination corresponding to the date unit, so as to screen out the most cost-effective change method for the user. Finally, flight information of each date unit and the price difference of the corresponding final selected flight combination are fed back to the current user. Thus, a method capable of performing a change search on a plurality of flight segments simultaneously is implemented, so that multiple operations are not needed, corresponding calculations can be performed simultaneously for a plurality of dates, and the most cost-effective change option can be directly screened out and provided for the user.

### BRIEF DESCRIPTION OF THE DRAWINGS

To more clearly illustrate the technical solutions in the embodiments of the present application or the prior art, the accompanying drawings that need to be used in the description of the embodiments or the prior art will be briefly introduced below. Apparently, the accompanying drawings in the description below merely illustrate the embodiments of the present application. Those of ordinary skill in the art can also derive other accompanying drawings from the provided accompanying drawings without creative efforts.
FIG. 1 is a flowchart of an airline ticket change information processing method provided by an embodiment of the present application;
FIG. 2 is a flowchart of a method for constructing each date unit provided by an embodiment of the present application;
FIG. 3 is a flowchart of a method for generating candidate flight combinations provided by an embodiment of the present application;
FIG. 4 is a schematic diagram of an architecture of an airline ticket change information processing apparatus provided by an embodiment of the present application; and
FIG. 5 is a schematic diagram of an architecture of an electronic device provided by an embodiment of the present application.

### DETAILED DESCRIPTION OF THE EMBODIMENTS

The technical solutions in the embodiments of the present application will be clearly and completely described below with reference to the accompanying drawings in the embodiments of the present application. Apparently, the described embodiments are merely some rather than all of the embodiments of the present application. All other embodiments obtained by those of ordinary skill in the art based on the embodiments in the present application without creative efforts shall fall within the scope of protection of the present application.

In the present application, the relational terms such as first and second are only used to distinguish one entity or operation from another, and do not necessarily require or imply that any such actual relationship or order exists between these entities or operations. Moreover, the terms "comprise" and "include" or any other variations thereof are intended to cover a non-exclusive inclusion, so that a process, method, article, or device including a series of elements not only includes those elements, but also includes other elements not expressly listed or inherent to such process, method, article, or device. Without further limitations, an element defined by the phrase "includes one..." does not exclude the presence of additional identical elements in the process, method, material, or device including the element.

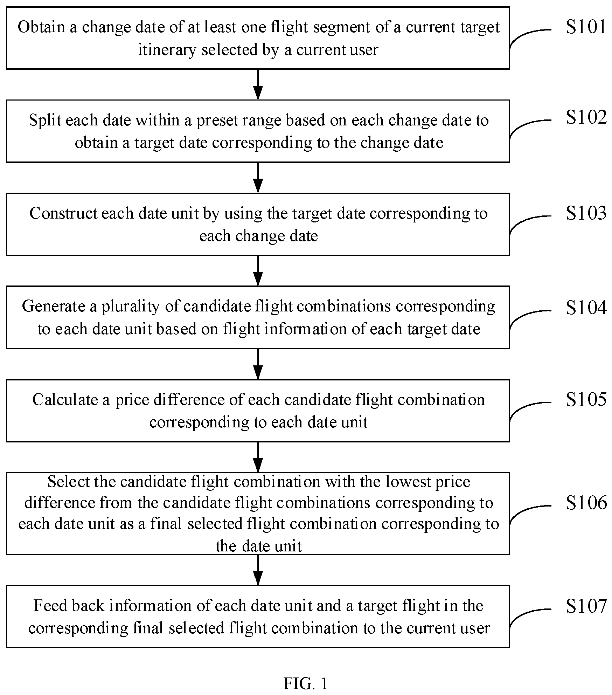

An embodiment of the present application provides an airline ticket change information processing method, as shown in FIG. 1, including the following steps.

In S101, a change date of at least one flight segment of a current target itinerary selected by a current user is obtained.

The current target itinerary refers to an itinerary for which airline ticket change is currently required.

It is to be noted that an airline ticket for the current target itinerary purchased by the current user may be a ticket for the outward journey, a round-trip ticket, or a one-way ticket with two flight segments. For example, for an itinerary from Beijing to Tokyo, the user needs to fly from Beijing to Hong Kong first and then from Hong Kong to Tokyo. Although the airline ticket is a one-way ticket for the outward journey only, it has two flight segments. Certainly, the airline ticket may also be other tickets with multiple flight segments.

Since each flight segment may be changed, the current user can, according to a requirement, select a change date of the outward journey or the return journey only, or select changed departure dates of both the outward journey and the return journey. Moreover, for both the outward journey and the return journey, if there are multiple flight segments included, the user can also choose whether to change a specific flight segment individually and select a change date correspondingly.

However, the selection of the change date can only be made for the unflown flight segments allowed to be changed, and for the selection of the change date for each flight segment, the order of the flight segments needs to be followed, and only one change date can be selected for each flight segment. For example, the change date of the outward journey cannot be later than the change date of the return journey.

Accordingly, even if the change dates selected for different flight segments are the same day, they are still considered as two selected change dates, meaning there are two change dates.

In S102, each date within a preset range based on each change date is split to obtain a target date corresponding to the change date.

It is to be noted that in this embodiment of the present application, a search is no longer only conducted for one fixed date, but for each date within the preset range including the change dates, that is, a search is made for each target date, and the target dates include the change dates.

Since each change date is specific to a different flight segment, in this embodiment of the present application, it is needed to split each date within the preset range based on each change date to obtain the target date corresponding to the change date. Moreover, even if a plurality of change dates are the same day, they needs to be split separately to obtain the target date corresponding to the change date of each flight segment.

Optionally, each date within the preset range based on each change date may be the change date and N days after the change date, or a preset range from N days before the change date to M days after the change date, or other ranges.

Optionally, in another embodiment of the present application, a specific implementation of step S102 includes the following steps.

Each date within seven days with each change date as a middle date is split to obtain a target date corresponding to the change date.

Accordingly, in this embodiment of the present application, the change date, the three days before the change date, and the three days after the change date are split out as the target dates.

Optionally, considering that calculating corresponding data for past time is meaningless and adds unnecessary computational load, after the target date corresponding to each change date is obtained, each target date earlier than the current date in the target dates corresponding to each change date can be removed.

In S103, each date unit is constructed by using the target date corresponding to each change date.

One date unit includes one target date corresponding to each change date, and a sequential order of the target dates conforms to a flight segment order of the corresponding change dates, so that the number of target dates included in one date unit is equal to the number of change dates, and the sequential order of the included target dates needs to comply with the order of the flight segments corresponding to the target dates, thereby ensuring that the itinerary of the current user is met. For example, the outward journey is before the return journey, so that the target date corresponding to the change date of the outward journey included in one date unit should not be later than the target date corresponding to the change date of the return journey. Accordingly, the date unit constructs all achievable itinerary arrangements.

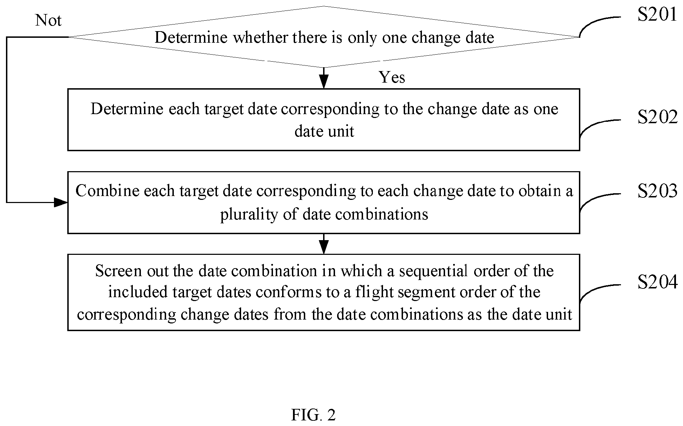

Optionally, in another embodiment of the present application, a specific implementation of step S103, as shown in FIG. 2, includes the following steps.

In S201, it is determined whether there is only one change date.

When there is only one change date, only one flight segment needs to be changed, and there is no need for date combination, so if it is determined that there is only one change date, step S202 is performed. If it is determined that there is more than one change date, that is, when there are a plurality of change dates, step S203 is performed.

In S202, each target date corresponding to the change date is determined as one date unit.

In S203, each target date corresponding to each change date is combined to obtain a plurality of date combinations.

Each date combination includes one target date corresponding to each change date.

In S204, the date combination in which a sequential order of the included target dates conforms to a flight segment order of the corresponding change dates is screened out from the date combinations as the date unit.

Optionally, for step S203 and step S204, specifically, a multi-dimensional array can be constructed. Each array is a date combination. Then, the date units are screened out based on values corresponding to each array. For example, if the change date of the outward journey selected by the current user is November 24th, the change date of the return journey is November 26th. Accordingly, a two-dimensional array as shown in Table 1 below can be constructed based on the target dates corresponding to the two change dates. The values in the table are specifically set as follows: when the target date of the outward journey is not later than the target date of the return journey, the values are 1; and when the target date of the outward journey is later than the target date of the return journey, the values are 0. Therefore, finally, the target dates with a value of 1 in the table can be combined into the date unit.

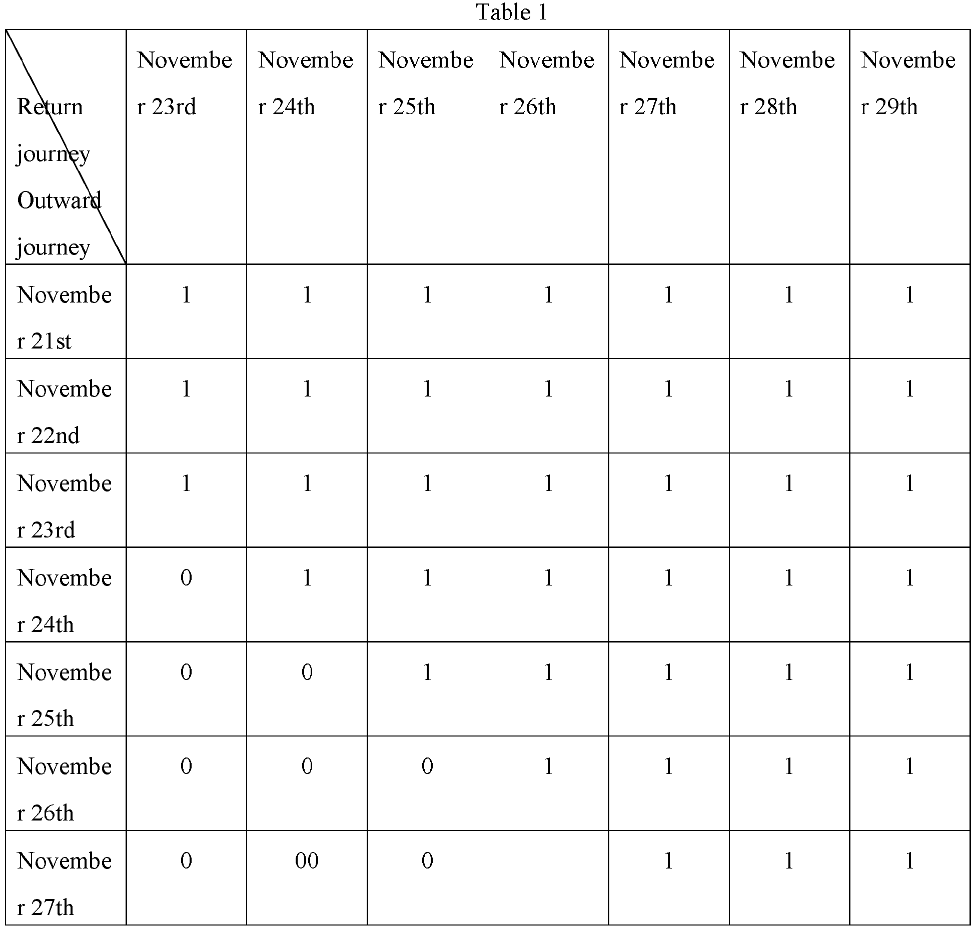

In S104, a plurality of candidate flight combinations corresponding to each date unit are generated based on flight information of each target date.

One candidate flight combination corresponding to the date unit includes one target flight on each target date in the date unit, that is, the number of target flights in the flight combination corresponding to one date unit is consistent with the number of target dates in the date unit, namely, it is consistent with the number of change dates. Therefore, when there is only one change date, one candidate flight combination includes only one flight. The target flight on the target date refers to a flight whose flight segment is consistent with that on the change date corresponding to the target date in the target dates.

It is to be noted that, generally, there are a plurality of flights within a day, and among these flights, there are usually a plurality of target flights whose flight segments are consistent with those on the change dates corresponding to the target dates. For example, for a flight segment from Beijing to Shanghai, there are usually a plurality of flights at different time points and operated by different airlines on a certain day. Accordingly, after the change date is determined, that is, after one date unit is determined, there are also multiple flight options. Since different flight combinations have different prices, various optional flight combinations need to be determined to determine which option is the most cost-effective.

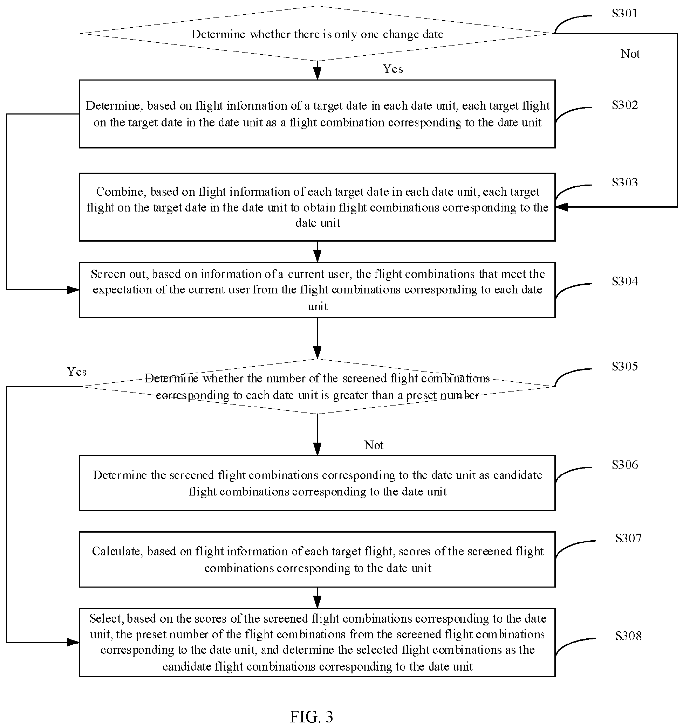

Optionally, in another embodiment of the present application, a specific implementation of step S104, as shown in FIG. 3, includes the following steps.

In S301, it is determined whether there is only one change date.

When there is only one change date, it is not needed to combine target flights on different target dates, so when it is determined that there is only one change date, step S302 is performed. If it is determined that there is more than one change date, that is, when there are a plurality of change dates, step S303 is performed.

In S302, based on flight information of a target date in each date unit, each target flight on the target date in the date unit is determined as a flight combination corresponding to the date unit.

In S303, based on flight information of each target date in each date unit, each target flight on the target date in the date unit is combined to obtain flight combinations corresponding to the date unit.

One flight combination includes one target flight on each target date in the date unit.

In S304, based on information of the current user, the flight combinations that meet the expectation of the current user are screened out from the flight combinations corresponding to each date unit.

Considering that different users have different preferences, such as whether to have a transfer, whether an overnight stay is required, and flights of some specific airlines, and in order to reduce the subsequent computational load, in this embodiment of the present application, the flight combinations that meet the expectation of the current user are screened out based on the information of the current user, and then subsequent calculations are performed on the screened flight combinations.

In S305, it is determined whether the number of the screened flight combinations corresponding to each date unit is greater than a preset number.

Since the calculation process for flight change involves a large amount of computation, to improve the computational efficiency and reduce the consumption of computing resources, in this embodiment of the present application, a certain number of flight combinations are screened out only from the flight combinations that meet the expectation of the current user to carry out the subsequent calculation process. Therefore, it is needed to determine whether the number of the screened flight combinations corresponding to the date unit is greater than the preset number. If it is determined whether the number of the screened flight combinations corresponding to the date unit is not greater than the preset number, step S306 can be performed. If it is determined whether the number of the screened flight combinations corresponding to the date unit is greater than the preset number, step S308 needs to be performed.

In S306, the screened flight combinations corresponding to the date unit are determined as the candidate flight combinations corresponding to the date unit.

In S307, scores of the screened flight combinations corresponding to the date unit are calculated based on flight information of each target flight.

Specifically, the scores of the flight combinations can be calculated based on flight information such as whether the target flight has a transfer, a fare, a diversion altitude, and flight time. For example, the fewer the transfers, the shorter the flight time, the lower the fare, the lower the diversion altitude, the higher the score.

In S308, based on the scores of the screened flight combinations corresponding to the date unit, the preset number of the flight combinations are selected from the screened flight combinations corresponding to the date unit, and the selected flight combinations are determined as the candidate flight combinations corresponding to the date unit.

Specifically, the flight combinations can be sorted in descending order according to the scores, and then the flight combinations ranked before the position corresponding to the preset number are selected as the candidate flight combinations corresponding to the date unit.

In S105, a price difference of each candidate flight combination corresponding to each date unit is calculated.

Specifically, a fare of an original ticket is recalculated, corresponding refund and change rules are obtained, then a fare of a new itinerary corresponding to each candidate flight combination is calculated based on the refund and change rules, and finally, a price difference between old and new itineraries is calculated to obtain a price difference of each candidate flight combination.

Optionally, for the convenience of data transfer and management, in another embodiment of the present application, before step S105 is performed, the following steps can be further performed:
A calculation request message for each candidate flight combination corresponding to each date unit is generated, and each date unit, each candidate flight combination corresponding to each date unit, and the calculation request message are stored according to a two-level storage structure.

The two-level storage structure refers to using two levels of key-value pairs for storage. Specifically, as shown in Table 2 below, in a first level of key-value pair, the key is the date unit, and the value is a two-level key-value pair composed of the candidate flight combination and the calculation request message. In a second level of key-value pair, the key is the candidate flight combination, and the value is the calculation request message.

**Table 2**

| Key | Value | |
|---|---|---|
| | key | value |
| Date unit 1 | Candidate flight combination 1_1 | Calculation request message 1_1 |
| | Candidate flight combination 1_2 | Calculation request message 1_2 |
| | ... | ... |
| | Candidate flight combination 1_n | Calculation request message 1_n |
| ... | | |
| Date unit n | Candidate flight combination n_1 | Calculation request message n_1 |
| | Candidate flight combination n_2 | Calculation request message n_2 |
| | ... | ... |
| | Candidate flight combination n_n | Calculation request message n_n |

Optionally, the method provided by this embodiment of the present application can be implemented by two modules: a main flight search module and a fare refund and change calculation module. A calling relationship between the two modules may be cohesive or separated. The so-called cohesive type can be understood as follows: the two modules are nested with each other and the communication between the two modules does not rely on network transmission. For example, the fare calculation module is included in the flight search module. The separated type can be understood as follows: the flight search module and the fare calculation module are independent of each other and they need to interact through network transmission. Accordingly, to facilitate the transfer between the two modules, the corresponding calculation request message will be generated in this embodiment of the present application.

In S106, the candidate flight combination with the lowest price difference is selected from the candidate flight combinations corresponding to each date unit as a final selected flight combination corresponding to the date unit.

In S107, information of each date unit and the target flight in the corresponding final selected flight combination is fed back to the current user.

Optionally, in another embodiment of the present application, a specific implementation of step S107 includes the following steps.

The flight information of each date unit and the price difference of the corresponding final selected flight combination are converted and integrated to obtain a calendar mode change search result, and the calendar mode change search result is fed back to the current user.

To facilitate the user to obtain relevant information more intuitively, in this embodiment of the present application, feedback is provided for the current user in a calendar mode.

An embodiment of the present application provides an airline ticket change information processing method. A change date of at least one flight segment of a current target itinerary selected by a current user is obtained, that is, the user is allowed to perform a change search on a plurality of flight segments. Then, each date within a preset range based on each change date is split to obtain a target date corresponding to the change date, so that subsequent corresponding calculations can be performed simultaneously for the target dates, rather than for fixed dates. Subsequently, each date unit is constructed by using the target date corresponding to each change date. One date unit includes one target date corresponding to each change date, and a sequential order of the target dates conforms to a flight segment order of the corresponding change dates. Then, a plurality of candidate flight combinations corresponding to each date unit are generated based on flight information of each target date. One candidate flight combination corresponding to the date unit includes one target flight in each target date in the date unit; and the target flight on the target date refers to a flight whose flight segment is consistent with that on the change date corresponding to the target date in the target dates. Next, a price difference of each candidate flight combination corresponding to each date unit is calculated, and the candidate flight combination with the lowest price difference is selected from the candidate flight combinations corresponding to each date unit as a final selected flight combination corresponding to the date unit, so as to screen out the most cost-effective change method for the user. Finally, flight information of each date unit and the price difference of the corresponding final selected flight combination are fed back to the current user. Thus, a method capable of performing a change search on a plurality of flight segments simultaneously is implemented, so that multiple operations are not needed, corresponding calculations can be performed simultaneously for a plurality of dates, and the most cost-effective change option can be directly screened out and provided for the user.

It is to be noted that the flowcharts and block diagrams in the accompanying drawings show the system architectures, functions, and operations possibly implemented by systems, methods, nodes, and computer program products according to various embodiments of the present application. In this regard, each block in the flowcharts or block diagrams may represent a module, a program segment, or a part of a code, and the module, the program segment, or the part of the code includes one or more executable instructions for implementing a specified logical function. It should also be noted that, in some alternative implementations, functions marked in the blocks may also occur in a sequence different from that marked in the accompanying drawings. For example, two consecutive blocks may be actually executed substantially in parallel, or sometimes may be executed in a reverse order, depending on a function related. It should also be noted that each box in the block diagram and/or flowchart, and a combination of the boxes in the block diagram and/or flowchart can be implemented by a dedicated hardware-based system that performs a prescribed function or operation, or by a combination of specialized hardware and computer instructions.

Although all operations are described in a specific order, these operations should not be understood as being required to be performed in the shown specific order or in a sequential order. In a specific context, multitasking and parallel processing may be beneficial.

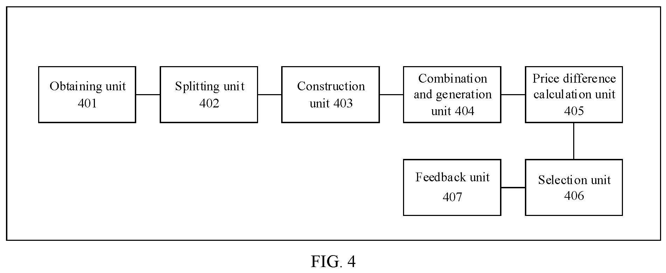

Another embodiment of the present application provides an airline ticket change information processing apparatus, as shown in FIG. 4, including:
an obtaining unit 401, configured to obtain a change date of at least one flight segment of a current target itinerary selected by a current user;
a splitting unit 402, configured to split each date within a preset range based on each change date to obtain a target date corresponding to the change date;
a construction unit 403, configured to construct each date unit by using the target date corresponding to each change date,
where one date unit includes one target date corresponding to each change date, and a sequential order of the target dates conforms to a flight segment order of the corresponding change dates;
a combination and generation unit 404, configured to generate a plurality of candidate flight combinations corresponding to each date unit based on flight information of each target date,
where one candidate flight combination corresponding to the date unit includes one target flight on each target date in the date unit, and the target flight on the target date refers to a flight whose flight segment is consistent with that on the change date corresponding to the target date in the target dates;
a price difference calculation unit 405, configured to calculate a price difference of each candidate flight combination corresponding to each date unit;
a selection unit 406, configured to select the candidate flight combination with the lowest price difference from the candidate flight combinations corresponding to each date unit as a final selected flight combination corresponding to the date unit; and
a feedback unit 407, configured to feed back flight information of each date unit and the price difference of the corresponding final selected flight combination to the current user.

Optionally, in the airline ticket change information processing apparatus provided by another embodiment of the present application, the splitting unit includes
a splitting sub-unit, configured to split each date within seven days with each change date as a middle date to obtain a target date corresponding to the change date.

Optionally, in the airline ticket change information processing apparatus provided by another embodiment of the present application, the construction unit includes:
a first construction unit, configured to determine, when there is only one change date, each target date corresponding to the change date as one of the date units;
a date combination unit, configured to combine, when there are a plurality of change dates, each target date corresponding to each change date to obtain a plurality of date combinations, where each date combination includes one target date corresponding to each change date; and
a second construction unit, configured to screen out the date combination in which the sequential order of the included target dates conforms to the flight segment order of the corresponding change dates from the date combinations as the date unit.

Optionally, in the airline ticket change information processing apparatus provided by another embodiment of the present application, the combination and generation unit includes:
a first generation unit, configured to determine, based on the flight information of the target date in each date unit, each target flight on the target date on the date unit as a flight combination corresponding to the date unit when there is only one change date;
a flight combination unit, configured to combine, based on the flight information of each target date in each date unit, each target flight on the target date in the date unit to obtain a flight combination corresponding to the date unit when there are a plurality of change dates,
where one flight combination includes one target flight on each target date in the date unit;
a screening unit, configured to screen out, based on information of the current user, the flight combinations that meet the expectation of the current user from the flight combinations corresponding to each date unit;
a determination unit, configured to determine whether the number of the screened flight combinations corresponding to each date unit is greater than a preset number;
a second generation unit, configured to determine, when it is determined that the number of the screened flight combinations corresponding to the date unit is not greater than the preset number, the screened flight combinations corresponding to the date unit as the candidate flight combinations corresponding to the date unit;
a score calculation unit, configured to calculate, based on flight information of each target flight, scores of the screened flight combinations corresponding to the date unit when it is determined that the number of the screened flight combinations corresponding to the date unit is greater than the preset number; and
a third generation unit, configured to select, based on the scores of the screened flight combinations corresponding to the date unit, the preset number of the flight combinations from the screened flight combinations corresponding to the date unit, and determine the selected flight combinations as the candidate flight combinations corresponding to the date unit.

Optionally, the airline ticket change information processing apparatus provided by another embodiment of the present application further includes:
a message generation unit, configured to generate a calculation request message for each candidate flight combination corresponding to each date unit; and
a storage unit, configured to store each date unit, each candidate flight combination corresponding to each date unit, and the calculation request message according to a two-level storage structure.

Optionally, in the airline ticket change information processing apparatus provided by another embodiment of the present application, the feedback unit includes
a feedback sub-unit, configured to convert and integrate the flight information of each date unit and the price difference of the corresponding final selected flight combination to obtain a calendar mode change search result, and feed back the calendar mode change search result to the current user.

It is to be noted that, for the specific working processes of the units provided in the above embodiments of the present application, reference can be made to the corresponding steps in the above method embodiments accordingly, and details will not be repeated herein.

Moreover, the functions of the units described in the above embodiments can be performed, at least in part, by one or more hardware logic components. For example, hardware logic components that can be used as examples include, unlimitedly, a field-programmable gate array (FPGA), an application-specific integrated circuit (ASIC), an application-specific standard product (ASSP), a system-on-chip (SOC), a complex programmable logic device (CPLD), and the like.

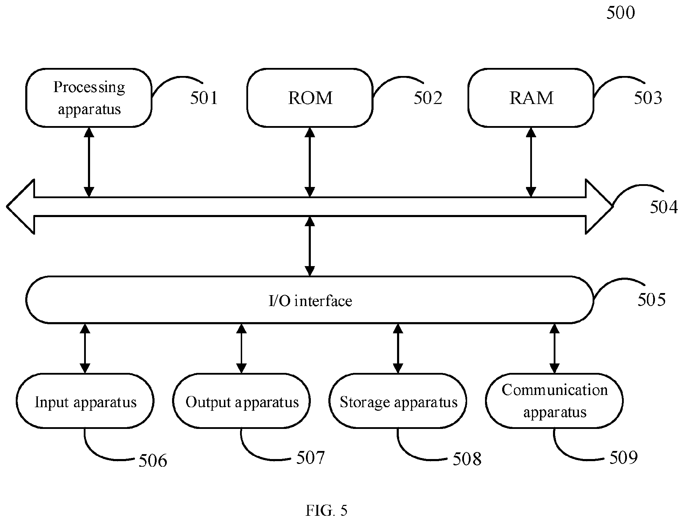

Another embodiment of the present application provides an electronic device, as shown in FIG. 5 that shows a schematic structural diagram of an electronic device 500 suitable for implementing the embodiments of the present disclosure. The electronic device in the embodiments of the present disclosure may include, but is not limited to, electronic devices such as a desktop computer, a laptop, a tablet, and an in-vehicle terminal.

As shown in FIG. 5, the electronic device 500 includes one or more processing apparatuses 501, such as a central processing unit and a graphics processing unit, and a memory 502, on which one or more programs are stored. When the one or more programs are executed by the one or more processing apparatuses 501, the one or more processing apparatuses 501 implement the airline ticket change information processing method provided by any one of the above embodiments.

Optionally, the electronic device may also include other components. Also referring to FIG. 5, the processing apparatus 501, the read-only memory (ROM) 502, and a random access memory (RAM) 503 are connected to one another through a bus 504. An input/output (I/O) interface 505 is also connected to the bus 504. Typically, the following apparatuses can be connected to the I/O interface 505: an input apparatus 506 including, for example, a touch screen, a touch pad, a keyboard, a mouse, a camera, a microphone, an accelerometer, a gyroscope, etc.; an output apparatus 507 including, for example, a liquid crystal display, a speaker, a vibrator, etc.; a storage apparatus 508 including, for example, a magnetic tape, a hard disk, etc.; and a communication apparatus 509. The communication apparatus 509 can allow the electronic device 500 to be in wireless or wired communication with other devices to exchange data. Although FIG. 5 shows the electronic device 500 with various apparatuses, it should be understood that it is not required to implement or possess all the apparatuses shown. Alternatively, more or fewer apparatuses can be implemented or possessed.

Another embodiment of the present application provides a computer storage medium. The computer storage medium is configured to store a program. The program, when executed, is configured to implement the airline ticket change information processing method according to any one of the above.

The computer storage medium includes permanent and non-permanent media as well as removable and non-removable media, and can achieve information storage by any method or technology. Information may be computer-readable instructions, data structures, program modules, or other data. Examples of the computer storage medium include, but are not limited to, a phase change random access memory (PRAM), a static random access memory (SRAM), a dynamic random access memory (DRAM), other types of random access memories (RAM), a read-only memory (ROM), an electrically erasable programmable read-only memory (EEPROM), a flash memory or other memories, a compact disc read-only memory (CD-ROM), a digital versatile disc (DVD) or other optical storages, a cassette magnetic tape, and a magnetic tape and disk storage or other magnetic storage devices or any other non-transmission media, which can be used to store information that can be accessed by a computing device. As defined herein, the computer-readable medium does not include transitory media, such as modulated data signals and carrier waves.

Professionals can also further realize that the units and algorithm steps of each example described in combination with the embodiments disclosed herein can be implemented in electronic hardware, computer software, or a combination thereof. To clearly illustrate the interchangeability of hardware and software, the composition and steps of each example have been generally described according to the functions in the above description. Whether these functions are implemented by means of hardware or software depends on the specific application and design constraint conditions of the technical solution. Professionals can implement the described function using different methods for each specific application, but such implementation should not be considered beyond the scope of the present application.

The above description of the disclosed embodiments enables those skilled in the art to implement or use the present application. Various modifications to these embodiments will be apparent to those skilled in the art, and the general principles defined herein can be implemented in other embodiments without departing from the spirit or scope of the present application. Therefore, the present application will not be limited to the embodiments shown herein, but shall conform to the broadest scope consistent with the principles and novel characteristics disclosed herein. The technical solutions in the embodiments of the present application will be clearly and completely described below with reference to the accompanying drawings in the embodiments of the present application. Apparently, the described embodiments are merely some rather than all of the embodiments of the present application. All other embodiments obtained by those of ordinary skill in the art based on the embodiments in the present application without creative efforts shall fall within the scope of protection of the present application.

## Claims

1. An airline ticket change information processing method, **characterized by** comprising:
obtaining a change date of at least one flight segment of a current target itinerary selected by a current user;
splitting each date within a preset range based on each of the change dates to obtain a target date corresponding to the change date;
constructing each date unit by using the target date corresponding to each of the change dates, wherein one of the date units comprises one of the target dates corresponding to each of the change dates, and a sequential order of the target dates conforms to a flight segment order of the corresponding change dates;
generating a plurality of candidate flight combinations corresponding to each of the date units based on flight information of each of the target dates, wherein one of the candidate flight combinations corresponding to the date unit comprises one target flight in each of the target dates in the date unit, and the target flight on the target date refers to a flight whose flight segment is consistent with that on the change date corresponding to the target date in the target dates;
calculating a price difference of each of the candidate flight combinations corresponding to each of the date units;
selecting the candidate flight combination with the lowest price difference from the candidate flight combinations corresponding to each of the date units as a final selected flight combination corresponding to the date unit; and
feeding back flight information of each of the date units and the price difference of the corresponding final selected flight combination to the current user.

2. The method according to claim 1, **characterized in that** the splitting each date within a preset range based on each of the change dates to obtain a target date corresponding to the change date comprises:
splitting each date within seven days with each of the change dates as a middle date to obtain a target date corresponding to the change date.

3. The method according to claim 1, **characterized in that** the constructing each date unit by using the target date corresponding to each of the change dates comprises:
if there is only one change date, determining each of the target dates corresponding to the change date as one of the date units;
if there are a plurality of change dates, combining each of the target dates corresponding to each of the change dates to obtain a plurality of date combinations, wherein each of the date combinations comprises one of the target dates corresponding to each of the change dates; and
screening out the date combination in which the sequential order of the comprised target dates conforms to the flight segment order of the corresponding change dates from the date combinations as the date unit.

4. The method according to claim 1, **characterized in that** the generating a plurality of candidate flight combinations corresponding to each of the date units based on flight information of each of the target dates comprises:
if there is only one change date, determining, based on the flight information of the target date in each of the date units, each of the target flights on the target date in the date unit as a flight combination corresponding to the date unit;
if there are a plurality of change dates, combining, based on the flight information of each of the target dates in each of the date units, each of the target flights on the target date in the date unit to obtain a flight combination corresponding to the date unit, wherein one of the flight combinations comprises one of the target flights in each of the target dates in the date unit;
screening out, based on information of the current user, the flight combinations that meet the expectation of the current user from the flight combinations corresponding to each of the date units;
determining whether the number of the screened flight combinations corresponding to each of the date units is greater than a preset number;
if it is determined that the number of the screened flight combinations corresponding to the date unit is not greater than the preset number, determining the screened flight combinations corresponding to the date unit as the candidate flight combinations corresponding to the date unit;
if it is determined that the number of the screened flight combinations corresponding to the date unit is greater than the preset number, calculating, based on flight information of each of the target flights, scores of the screened flight combinations corresponding to the date unit; and
selecting, based on the scores of the screened flight combinations corresponding to the date unit, the preset number of the flight combinations from the screened flight combinations corresponding to the date unit, and determining the selected flight combinations as the candidate flight combinations corresponding to the date unit.

5. The method according to claim 1, **characterized in that** before calculating a price difference of each of the candidate flight combinations corresponding to each of the date units, the method further comprises:
generating a calculation request message for each of the candidate flight combinations corresponding to each of the date units; and
storing each of the date units, each of the candidate flight combinations corresponding to each of the date units, and the calculation request message according to a two-level storage structure.

6. The method according to claim 1, **characterized in that** the feeding back flight information of each of the date units and the price difference of the corresponding final selected flight combination to the current user comprises:
converting and integrating the flight information of each of the date units and the price difference of the corresponding final selected flight combination to obtain a calendar mode change search result, and feeding back the calendar mode change search result to the current user.

7. An airline ticket change information processing apparatus, **characterized by** comprising:
an obtaining unit, configured to obtain a change date of at least one flight segment of a current target itinerary selected by a current user;
a splitting unit, configured to split each date within a preset range based on each of the change dates to obtain a target date corresponding to the change date;
a construction unit, configured to construct each date unit by using the target date corresponding to each of the change dates, wherein one of the date units comprises one of the target dates corresponding to each of the change dates, and a sequential order of the target dates conforms to a flight segment order of the corresponding change dates;
a combination and generation unit, configured to generate a plurality of candidate flight combinations corresponding to each of the date units based on flight information of each of the target dates, wherein one of the candidate flight combinations corresponding to the date unit comprises one target flight in each of the target dates in the date unit, and the target flight on the target date refers to a flight whose flight segment is consistent with that on the change date corresponding to the target date in the target dates;
a price difference calculation unit, configured to calculate a price difference of each of the candidate flight combinations corresponding to each of the date units;
a selection unit, configured to select the candidate flight combination with the lowest price difference from the candidate flight combinations corresponding to each of the date units as a final selected flight combination corresponding to the date unit; and
a feedback unit, configured to feed back flight information of each of the date units and the price difference of the corresponding final selected flight combination to the current user.

8. The apparatus according to claim 7, **characterized in that** the splitting unit comprises
a splitting sub-unit, configured to split each date within seven days with each of the change dates as a middle date to obtain a target date corresponding to the change date.

9. An electronic device, **characterized by** comprising:
one or more processing apparatuses; and
a memory having one or more programs stored thereon, wherein
when the one or more programs are executed by the one or more processing apparatuses, the one or more processing apparatuses implement the airline ticket change information processing method according to any one of claims 1 to 6.

10. A computer storage medium, **characterized by** being configured to store a program, wherein the program, when executed, is configured to implement the airline ticket change information processing method according to any one of claims 1 to 6.
